# EUROPÄISCHE PATENTSCHRIFT

(11) **EP 0 845 070 B1**
(45) Veröffentlichungstag und Bekanntmachung des Hinweises auf die Patenterteilung: **03.11.1999**
(21) Anmeldenummer: 96932435.9
(22) Anmeldetag: 10.08.1996
(51) Int. Cl.: E21B 4/18, E21B 7/00

(54) **MOLCH ZUM AUSBAU EINES ERDKERNS AUS EINEM GRABENLOS VERLEGTEN ROHR**
SCRAPER FOR REMOVING AN EARTH CORE FROM A PIPE LAID WITHOUT EXCAVATION
ECOUVILLON POUR EXTRAIRE UN NOYAU DE TERRE HORS D'UN TUYAU POSE SANS EXCAVATION

(30) Priorität: 14.08.1995 DE 19529948
(43) Veröffentlichungstag der Anmeldung: 03.06.1998
(73) Patentinhaber: Derwand, Horst, 35236 Breidenbach (DE)
(72) Erfinder: Derwand, Horst, 35236 Breidenbach (DE)
(74) Vertreter: Haar, Lucas H., Dipl.-Ing.
(86) Internationale Anmeldenummer: DE9601503
(87) Internationale Veröffentlichungsnummer: WO9707316

(56) Entgegenhaltungen:
- WO-A-95/21984
- US-A- 4 601 204

## Beschreibung

Die Erfindung betrifft einen Molch zum Ausbau eines Erdkerns aus einem durch Rammen oder Pressen grabenlos verlegten Rohr, bestehend aus einem Schieber, einer in der Länge veränderbaren Hubvorrichtung und Spannvorrichtungen, wobei der Schieber mit einem Ende der Hubvorrichtung und mit einer ersten Spannvorrichtung und das andere Ende der Hubvorrichtung mit einer zweiten Spannvorrichtung verbunden ist, wobei die Spannvorrichtungen im Wechsel in eine Spannstellung, in der sie an die Innenwand eines Rohres anpressbar sind, oder in eine Lösestellung bewegbar sind, in der sie von der Innenwand des Rohres abgehoben sind und wobei die Hubvorrichtung und die Spannvorrichtungen mittels fernsteuerbarer hydraulischer Antriebe betätigbar sind.

Beim grabenlosen Verlegen von Rohrleitungen mit Hilfe von Rohrrammen oder Rohrpressen ist es zur Verringerung des Vortriebswiderstands bekannt, das Kopfende des Rohrstrangs offen zu lassen, wodurch beim Rohrvortrieb ein Erdkern in den Rohrstrang eindringt. In der WO95/21984 ist ein Verfahren zum Ausbau des Erdkerns aus einem verlegten Rohr angegeben, bei dem der Erdkern durch einen Molch aus dem Rohrstrang herausgedrückt wird, wobei der Vortrieb des Molches schrittweise durch eine in der Länge veränderbare Hubvorrichtung erfolgt, die sich an der Innenwand des Rohres abstützt und die nach jedem Ausfahrhub in ihre Ausgangslage gebracht wird, wobei die Abstützung der Hubvorrichtung in der Vortriebsrichtung um den vollzogenen Schritt nachgesetzt wird. Zur Durchführung des Verfahrens ist weiterhin ein Molch angegeben, der aus einer Kopfplatte, einer in der Länge veränderbaren Hubvorrichtung und Spannvorrichtungen besteht, wobei die Kopfplatte mit einem Ende der Hubvorrichtung und mit einer ersten Spannvorrichtung und das andere Ende der Hubvorrichtung mit einer zweiten Spannvorrichtung verbunden ist, wobei die Spannvorrichtungen im Wechsel in eine Spannstellung, in der sie an die Innenwand eines Rohres anpressbar sind, oder in eine Lösestellung bewegbar sind, in der sie von der Innenwand des Rohres abgehoben sind und wobei die Hubvorrichtung und die Spannvorrichtungen mittels fernsteuerbarer hydraulischer Antriebe betätigbar sind.

Der Erfindung liegt die Aufgabe zugrunde, einen Molch nach dem Hauptpatent weiterzubilden und in seiner Arbeitsweise und Handhabung zu verbessern.

Die Aufgabe wird erfindungsgemäß dadurch gelöst, daß die Hubvorrichtung einen Fühler aufweist, der bei Erreichen einer Endstellung der Hubvorrichtung ein Steuersignal erzeugt und daß zur Steuerung der hydraulischen Antriebe ein Steuerventil vorgesehen ist, das in Abhängigkeit von dem Steuersignal des Fühlers selbstätig die Arbeitsrichtung der hydraulischen Antriebe steuert.

Bei der erfindungsgemäßen Weiterbildung des Molchs wird das Aus- und Einfahren der Hubvorrichtung und die hierzu koordinierte wechselnde Betätigung der Spannvorrichtungen automatisch durch das Steuerventil bewirkt, sobald die Hubvorrichtung die eine oder andere Endstellung erreicht. Das Voranschreiten des Molches kann daher nach dessen Ingangsetzung ohne einen Steuerbefehl von außen kontinuierlich erfolgen, wodurch der Betrieb des Molches wesentlich vereinfacht wird. Nur wenn aufgrund zu großer Widerstände die Hubvorrichtung nicht in eine Endstellung gelangen kann, ist ein Eingreifen von außen erforderlich. Das Steuerventil ist vorzugsweise an dem Molch angebracht, um ein schnelles Ansprechen der Steuerung zu erreichen und Umsteuerverluste durch lange, aus elastisch verformbaren Elementen, wie Schläuchen, bestehende Übertragungswege zu vermeiden.

Als Fühler kommen mechanische, hydraulische oder elektrische Fühler in Betracht. Besteht die Hubvorrichtung aus einem doppelt wirkenden hydraulischen Hubzylinder so kann erfindungsgemäß als mechanischer Fühler ein stift- oder stangenartiges Fühlerelement vorgesehen sein, das den Boden des Hubzylinders durchdringt, in eine Längsbohrung in der Kolbenstange hineinragt und gegenüber dem Zylinderboden und der Kolbenstange mit gleichem Durchmesser abgedichtet ist und das durch Anschläge an der Kolbenstange und/oder dem Kolben zwischen zwei Stellungen hin und her bewegbar ist, wobei die Bewegung des Fühlerelements auf das am Hydraulikzylinder befestigte Umsteuerventil übertragen wird. Weiterhin ist von Vorteil, wenn das Fühlerelement durch ein kraftschlüssiges Rastgesperre in zwei Stellungen arretierbar ist. Weiterhin kann vorgesehen sein, daß das Fühlerelement aus einem Rohr besteht, durch das die Längsbohrung der Kolbenstange außerhalb des Hubzylinders an eine Druckmittelleitung anschließbar ist. Hierdurch kann auf einfache Weise ein hydraulischer Antrieb über die Kolbenstange mit Druckmittel versorgt werden.

Nach einem weiteren Vorschlag der Erfindung kann vorgesehen sein, daß die Bewegungsrichtung des Molches von der Strömungsrichtung des zugeführten Druckmittels abhängig ist. Auf diese Weise ist der Molch durch Vertauschen von Hochdruckanschluß und Niederdruckanschluß, z.B. mit Hilfe eines handbetätigten Steuerventils auf einfache Weise in seiner Bewegungsrichtung umsteuerbar. Erfindungsgemäß kann dies auf einfache Weise dadurch erreicht werden, daß die hydraulischen Antriebe der Spannvorrichtungen an ein Wegeventil angeschlossen sind, das in einer ersten Stellung den Antrieb der ersten Spannvorrichtung mit der einen Kammer des Hubzylinders und den Antrieb der zweiten Spannvorrichtung mit der anderen Kammer des Hubzylinders verbindet und in einer zweiten Stellung die genannten Verbindungswege gegeneinander vertauscht und daß das Wegeventil in Abhängigkeit vom Druckgefälle zwischen den beiden Anschlußleitungen schaltbar ist, die den Molch mit einem Energieversorgungssystem verbinden. Um sicherzustellen, daß die jeweils angesteuerte Spannvorrichtung angelegt ist, bevor sich die Hubvorrichtung in Bewegung setzt, können erfindungsgemäß Druckschaltventile vorgesehen sein, die die Druckmittelzufuhr zum hydraulischen Antrieb der Hubvorrichtung erst bei Erreichen eines zum Betätigen der Spannvorrichtung ausreichenden Drucks freigeben.

Zum Betätigen der Spannvorrichtungen können erfindungsgemäß hydraulische Spannzylinder vorgesehen sein. Hierbei ist von Vorteil, wenn die beim Vortrieb des Schiebers gleichzeitig mit Druck beaufschlagte Kammer des Hubzylinders und der Spannzylinder der zweiten, mit dem Hubzylinder verbundenen Spannvorrichtung hydraulisch miteinander verbunden sind und die gesamte hydraulische Wirkfläche der Spannzylinder etwa die 1,5- bis 2,5-fache Größe der hydraulischen Wirkfläche der Kammer des Hubzylinders hat. Hierdurch wird erreicht, daß die Anpreßkraft der Spannvorrichtung beim Vortriebshub des Molches jeweils um den sich aus dem Flächenverhältnis der hydraulischen Wirkflächen ergebenden Faktor größer ist als die Vortriebskraft, so daß eine sichere Abstützung der Hubvorrichtung im Rohr gewährleistet ist. Bleibt die Vortriebskraft hingegen niedrig, weil sich der Erdkern im Rohr leicht verschieben läßt, so ist auch die Anpreßkraft der Spannzylinder und damit die Beanspruchung des Rohrs entsprechend klein. Der Molch kann daher immer mit der geringsten notwendigen Druckbeaufschlagung betrieben werden, wodurch der Energiebedarf und der Verschleiß klein gehalten werden.

Eine einfache und robuste Bauweise des Molchs wird erfindungsgemäß dadurch erreicht, daß die Spannzylinder der zweiten Spannvorrichtung auf dem Zylindergehäuse des Hubzylinders angebracht sind und durch Bohrungen im Zylindergehäuse des Hubzylinders mit einem an den Hubzylinder angeflanschten Steuerblock verbunden sind. Die Spannzylinder der ersten Spannvorrichtung können erfindungsgemäß über Bohrungen in der Kolbenstange des Hubzylinders und das in die Längsbohrung hineinragende Rohr an den Steuerblock angeschlossen sein. Eine weitere bauliche Vereinfachung besteht erfindungsgemäß darin, daß die Spannzylinder Plungerkolben aufweisen und die Zylindergehäuse der Spannzylinder die Form von Hülsen haben, die mit einem Ende dicht mit dem Zylindergehäuse des Hubzylinders oder einem Gehäusekörper des Schiebers verbunden sind, wobei der Boden der Spannzylinder durch das Zylindergehäuse des Hubzylinders bzw. den Gehäusekörper des Schiebers gebildet wird.

Die Spannbacken der Spannvorrichtungen sind erfindungsgemäß in radialen Gleitführungen des Hubzylinders bzw. des Schiebers geführt und werden mit Hilfe vorgespannter Federn oder Federelementen gegen die Kolben der Spannzylinder gedrückt. Die Spannbacken der zweiten Spannvorrichtung können erfindungsgemäß aus einer sich in Längsrichtung des Hubzylinders erstreckenden, gebogenen Platte bestehen, die an einem Ende eine sich in Längsrichtung erstreckende Schiene mit seitlichen Führungsnuten aufweist, in die parallele, am Zylinderboden des Hubzylinders ausgebildete Führungsplatten eingreifen. Diese Ausgestaltung der Führung ermöglicht eine gleichmäßige Anlage der Spannbacken an der Innenwand des Rohrs und hat darüberhinaus den Vorteil, daß die Reaktionskräfte beim Ausfahrhub des Hubzylinders unmittelbar von dem Zylinderboden auf die Spannbacken übertragen werden, so daß das Zylindergehäuse hiervon unbelastet bleibt. Die Spannbacken am Schieber sind erfindungsgemäß in radialen Ausnehmungen angeordnet, die von einem Gehäusekörper und einem mit diesem verbundenen Flansch begrenzt werden, und weisen an ihrer Rückseite jeweils zwei parallele Führungszapfen auf, die in die Ausnehmungen miteinander verbindenden Nuten geführt sind. Durch diese Ausgestaltung der Spannvorrichtung des Schiebers wird eine vor Verschmutzung geschützte und zur Schmierung mit einem Schmiermittel geeignete Führung und Abstützung der Spannbacken geschaffen, die sich in die baulichen Verhältnisse des Schiebers gut integrieren läßt. Zur Erhöhung des Reibkontakts zwischen den Anpreßflächen der Spannbacken und der Rohrwand können die Spannbacken sich in Umfangsrichtung erstreckende Rillen haben.

Der aus dem Hubzylinder ausfahrende Teil der Kolbenstange kann erfindungsgemäß auf vorteilhafte Weise dadurch geschützt werden, daß zwischen dem Schieber und dem Hubzylinder eine die Kolbenstange bedeckende Teleskopfeder angeordnet ist, die aus einem spiralförmig aufgewickelten Federband besteht, das in axialer Richtung zur Bildung einer Röhre auseinanderbewegbar ist.

Eine zeitweilige Erhöhung der Vortriebskraft des Molches kann nach einem weiteren Vorschlag der Erfindung durch eine Druckerhöhungsvorrichtung ermöglicht werden, die an den Ausgang der hydraulischen Energieversorgung des Molchs anschließbar ist und aus einem Hydromotor, einer von dem Hydromotor angetriebene Druckerhöhungspumpe, deren Schluckvolumen kleiner ist als das Schluckvolumen des Hydromotors, und einem Druckschaltventil besteht, das bei Erreichen eines vorgegebenen Maximaldrucks den Eingang des Hydromotors mit der Hochdruckleitung verbindet. Die erfindungsgemäße Druckerhöhungsvorrichtung schaltet sich automatisch zu, wenn der Betriebsdruck in der Hochdruckleitung einen vorgegebenen Grenzwert überschreitet und schaltet automatisch wieder ab, wenn der Grenzwert wieder unterschritten wird. Die Druckerhöhungsvorrichtung hat den Vorteil, daß zur Energieversorgung des Molchs verfügbare Hydraulikaggregate, z.B. das Antriebsaggregat eines Hydraulikbaggers auch dann verwendet werden können, wenn in bestimmten Betriebsphasen die von dem Molch zu leistende Arbeit einen höheren Betriebsdruck erfordert.

Die Erfindung wird nachfolgend anhand eines Ausführungsbeispiels näher erläutert, das in der Zeichnung dargestellt ist. Es zeigen
- Figur 1: einen Molch in einer Betriebslage innerhalb einer Rohrleitung teilweise in Ansicht und teilweise geschnitten dargestellt,
- Figur 2: einen Axialschnitt durch den Schieber und das schieberseitige Ende der Hubvorrichtung des Molchs gemäß Figur 1,
- Figur 3: einen Radialschnitt des Schiebers entlang der Linie III-III in Figur 1,
- Figur 4: teils in Ansicht und teils im Axialschnitt das dem Schieber abgekehrte Ende der Hubvorrichtung des Molchs gemäß Figur 1,
- Figur 5: einen Radialschnitt des Molchs gemäß Figur 1 entlang der Linie V-V,
- Figur 6: einen Radialschnitt des Molchs entlang der Linie VI-VI in Figur 1,
- Figur 7: einen Schaltplan der hydraulischen Steuerung des Molchs gemäß Figur 1 und
- Figur 8: einen Schaltplan einer hydraulischen Steuerung zur Druckerhöhrung des Betriebsdrucks des Molchs gemäß Figur 1.

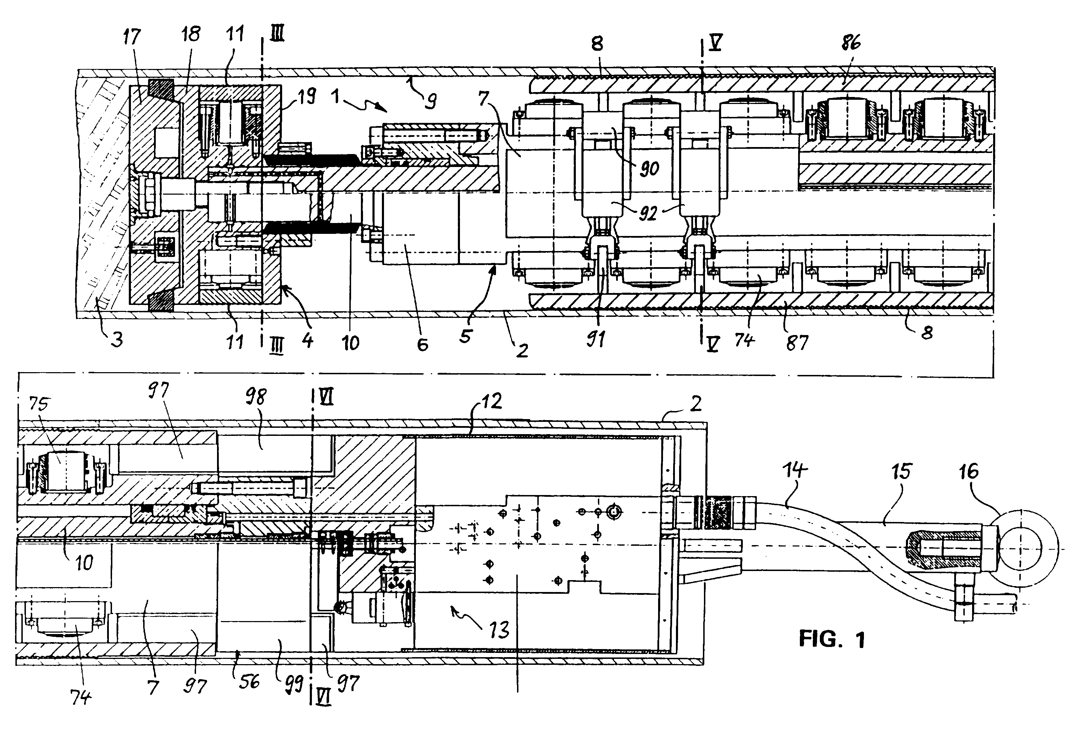

In Figur 1 ist der Molch 1 in einem Rohr 2 dargestellt, das einen Erdkern 3 enthält, der mit Hilfe des Molchs 1 aus dem Rohr 2 herausdrückbar ist. Der Molch 1 weist einen auf den Erdkern 3 einwirkenden Schieber 4 und eine hydraulische Hubvorrichtung 5 auf, die den Schieber 4 in Richtung des Erdkerns 3 bewegt. Die Hubvorrichtung 5 ist als doppelt wirkender hydraulischer Hubzylinder 6 ausgebildet, dessen Zylindergehäuse 7 mit Hilfe einer hydraulischen Spannvorrichtung 8 an der Innenwand des Rohrs 2 abstützbar ist. Der Schieber 4 ist an der Kolbenstange 10 des Hubzylinders 6 befestigt und weist eine hydraulische Spannvorrichtung 11 auf, die an die Innenwand 9 des Rohrs 2 andrückbar ist um den Schieber in seiner Position im Rohr 2 festzuhalten, wenn das Zylindergehäuse 7 zusammen mit der Spannvorrichtung 8 gegenüber dem Rohr 2 verschoben, z.B. in Vortriebsrichtung nachgesetzt wird. An dem hinteren, dem Schieber 4 abgekehrten Ende des Hubzylinders 6 ist ein Gehäuse 12 einer hydraulischen Steuervorrichtung 13 befestigt, die ein selbsttätiges Umsteuern der Hubvorrichtung 5 und der Spannvorrichtungen 8, 11 bewirkt, wenn die Hubvorrichtung 5 in die jeweilige Endstellung gelangt. Die Zufuhr von Druckmittel zum Betrieb des Molchs 1 erfolgt über zwei Hochdruckschläuche, von denen in Figur 1 nur ein Schlauch 14 dargestellt ist. Über die Hochdruckschläuche ist die Steuervorrichtung 13 des Molchs 1 mit einer Hochdruckpumpe und einer zu einem Behälter führenden Niederdruckleitung verbindbar. Um den Molch 1 bei einer Störung aus dem Rohr 2 herausziehen zu können, ist an dem Gehäuse 12 eine Stange 15 mit einer Öse 16 zum Einhängen eines Seils angebracht.

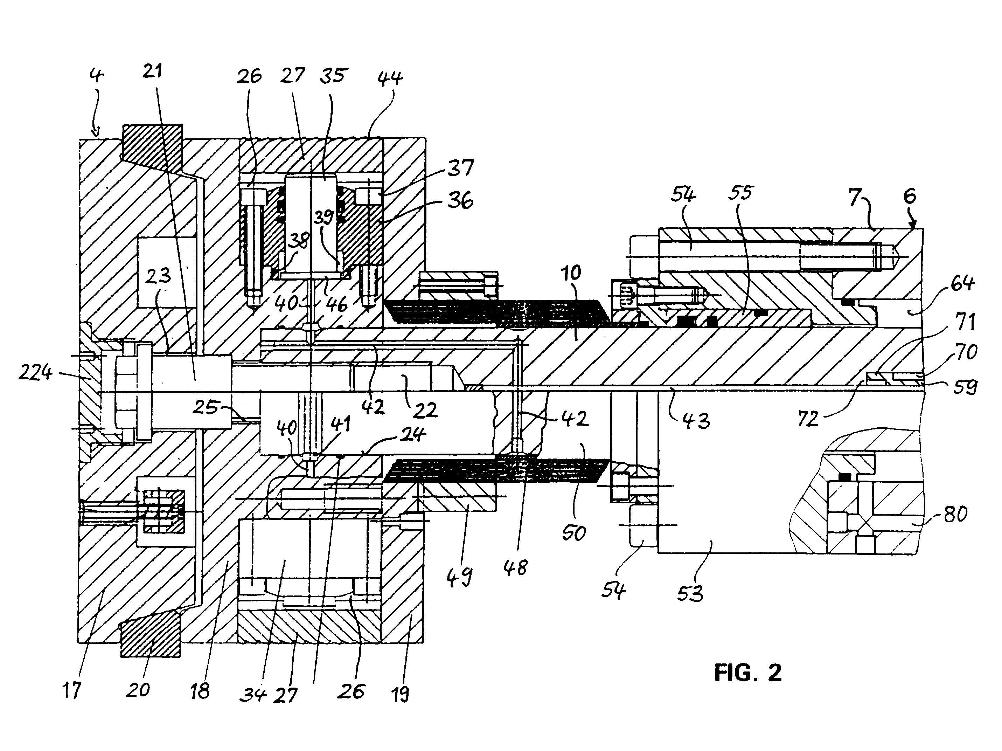

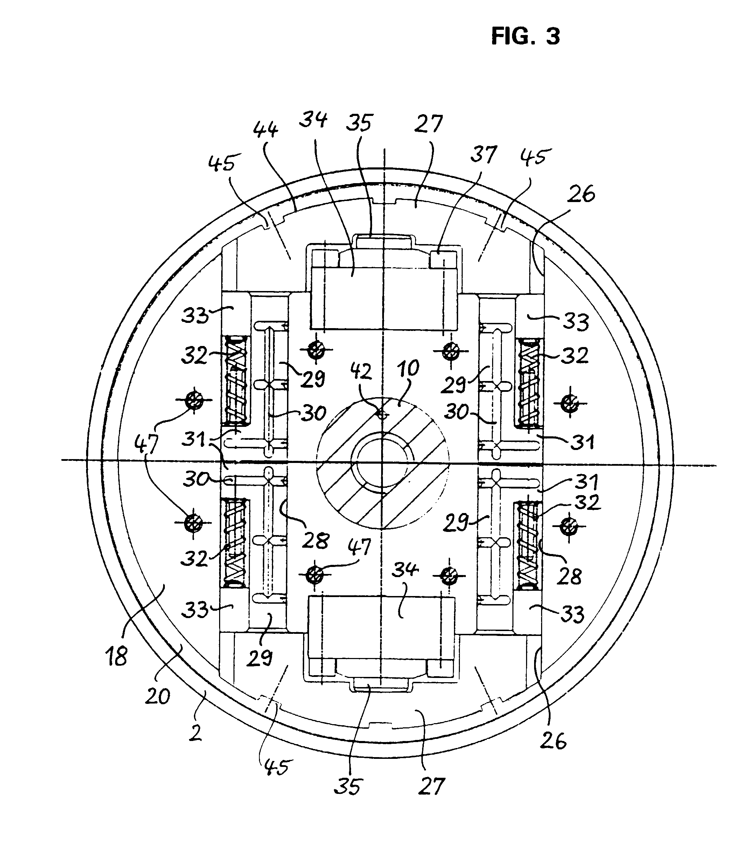

Wie aus den Figuren 2 und 3 zu ersehen, besteht der Schieber 4 aus einer Kopfplatte 17, einem Gehäusekörper 18 und einem Flansch 19, deren Außenkontur auf einer gemeinsamen Zylinderfläche liegt. Zwischen der Kopfplatte 17 und den Gehäusekörper 18 ist ein verschleißfester Abstreifring 20 eingespannt. Die Kopfplatte 17 ist gegenüber dem Gehäusekörper 18 in axialer Richtung begrenzt verschiebbar und wird von einer Schraube 21 gehalten, die in eine Gewindebohrung 22 im stirnseitigen Ende der Kolbenstange 10 eingeschraubt ist und mit ihrem zylindrischen Schaft eine zentrale Bohrung 23 in der Kopfplatte 17 durchgreift. Auf der dem Erdkern zugewandten Seite ist die Bohrung 23 durch einen Deckel 224 verschlossen.

Der Gehäusekörper 18 hat eine zentrale Paßbohrung 24, in die das Ende der Kolbenstange 10 eingesteckt ist. An die Paßbohrung 24 schließt sich eine Stufenbohrung 25 mit einer Abstützfläche für die Schraube 21 an, durch die der Gehäusekörper 18 in axialer Richtung an dem Ende der Kolbenstange 10 festgehalten wird. Der Gehäusekörper 18 weist an seinem Umfang in symmetrischer Anordnung zwei Ausnehmungen 26 auf, in denen Spannbacken 27 radial beweglich angeordnet sind. Die Ausnehmungen 26 sind durch Nuten 28 miteinander verbunden, die in Sekantenrichtung verlaufen. Die Nuten haben einen rechteckigen Querschnitt und ihre Wände bilden Führungsflächen für Führungszapfen 29, die an den Spannbacken 27 angebracht sind. Die Führungsflächen der Führungszapfen 29 sind mit Schmiernuten 30 versehen. Die radial inneren Enden der Führungszapfen 28 haben seitliche Vorsprünge 31, an denen Druckfedern 32 abgestützt sind. Die Druckfedern 32 sind parallel zu den Führungszapfen 29 in den Nuten 28 angeordnet und stützen sich mit ihren entgegengesetzten Enden an Vorsprüngen 33 des Gehäusekörpers 18 ab, die in die Nuten 28 hineinragen.

In der Mitte zwischen den Nuten 28 sind in Ausnehmungen des Gehäusekörpers 18 zwei Spannzylinder 34 mit Plungerkolben 35 angeordnet, die radial nach außen bewegbar sind, um die Spannbacken 27 an die Innenwand 9 des Rohrs 2 anzudrücken. Die Spannzylinder 34 haben ein ringförmiges Zylindergehäuse 36, das mittels Schrauben 37 an dem Gehäusekörper 18 befestigt ist. Jedes Zylindergehäuse 36 greift mit einem Ringbund in eine zylindrische Einsenkung im Gehäusekörper 18 ein und ist dort mit einem Dichtring 38 gegenüber dem Gehäusekörper 18 abgedichtet. Hierbei wird der Boden der Druckkammer 39 der Spannzylinder 34 von dem Gehäusekörper 18 gebildet, wodurch der Bauaufwand klein gehalten wird. Um eine Beschädigung der Spannvorrichtung 11 durch Bedienungsfehler zu vermeiden, sind die Plungerkolben 35 mit einem Bund 46 versehen, der den Ausfahrhub der Plungerkolben 35 begrenzt. Die Druckmittelzufuhr zu den Druckkammern 39 erfolgt über Radialbohrungen 40 im Gehäusekörper 18, die in einen durch gegenüberliegende Ringnuten in der Paßbohrung 24 und in der Kolbenstange 10 gebildeten Ringkanal 41 münden. Der Ringkanal 41 ist über axial und radial verlaufende Bohrungen 42 in der Kolbenstange 10 an eine die Kolbenstange 10 in Längsrichtung durchdringende, zentrale Bohrung 43 angeschlossen, die mit der Steuervorrichtung 13 in Verbindung steht.

Die an die Rohrwand andrückbaren Anpreßflächen 44 der Spannbacken 27 haben zur Erhöhung des Reibkontakts in Umfangsrichtung verlaufende Rillen. Zusätzlich sind die Anpreßflächen 44 durch Längsnuten 45 in mehrere Flächenabschnitte unterteilt.

Die Ausnehmungen 26 und die Nuten 28 sind auf der in Figur 3 sichtbaren Seite des Gehäusekörpers 18 durch den Flansch 19 verschlossen, der durch Schrauben 47 mit dem Gehäusekörper 18 fest verbunden ist. Im Bereich der Nuten 28 weist der Flansch 19 ebenfalls Führungsflächen für die Führungszapfen 29 auf.

Zum Schutz der Kolbenstange 10 beim Ausfahren aus dem Hubzylinder 6 ist zwischen dem Schieber 4 und dem Hubzylinder 6 eine Teleskopfeder 48 angeordnet, die im wesentlichen aus einem spiralförmig aufgewickelten Federband besteht, das aufgrund seiner Federspannung bestrebt ist, sich in axialer Richtung teleskopartig zu strecken und dadurch eine, die Kolbenstange schützend umgebende Röhre zu bilden. Das eine Ende der Teleskopfeder 48 greift in die Bohrung des Flanschs 19 ein, wobei es sich in axialer Richtung an dem Gehäusekörper 18 abstützt. Eine an dem Flansch 19 befestigte, dessen Bohrung verlängernde Hülse 49 bildet ein zusätzliches Lager für die Teleskopfeder 48 am Schieber 4. Das andere Ende der Teleskopfeder 48 ist auf einer die Kolbenstange 10 umgebenden Abdeckhülse 50 gelagert, die an der Stirnseite des Hubzylinders 6 angebracht ist.

Die Ausgestaltung des Hubzylinders 6 ist in Verbindung mit Figur 1 den Figuren 2, 4 und 5 zu entnehmen. Das Zylindergehäuse 7 des Hubzylinders 6 besteht aus einem zylindrischen Rohr, dessen Außenfläche bis auf die Endabschnitte vier zueinander rechtwinkelige, achsparallele Abflachungen 51, 52 aufweist. Das dem Schieber 4 zugewandte Ende des Zylindergehäuses 7 ist durch einen ringförmigen Zylinderkopf 53 verschlossen, der mittels Schrauben 54 an dem Zylindergehäuse 7 befestigt ist. In der Bohrung des Zylinderkopfs 53 befindet sich eine Führungsbuchse 55 aus einem geeigneten Lagerwerkstoff, in der die Kolbenstange 10 gelagert und abgedichtet ist. Am entgegengesetzten Ende des Zylindergehäuses 7 ist ein Zylinderboden 56 mittels Schrauben 57 befestigt. Der Zylinderboden hat eine zentrale Durchgangsbohrung 58, durch die sich ein Rohr 59 erstreckt, das in der Durchgangsbohrung 58 mit Hilfe einer Dichtungsanordnung 60 verschiebbar gelagert und abgedichtet ist.

In der Zylinderbohrung 61 des Zylindergehäuses 7 ist ein Kolben 62 angeordnet, der die Zylinderbohrung 61 in eine Ausfahrkammer 63 und eine Einziehkammer 64 unterteilt. Der Kolben 62 besteht aus drei Ringen 65, 66, 67, die auf der Kolbenstange 10 mittels einer Mutter 68 befestigt sind. Der Kolben 62 ist gegenüber der Kolbenstange 10 abgedichtet und weist in seiner Mantelfläche zwei Ringnuten auf, in denen Dichtringe 69 angeordnet sind. Der mittlere Ring 66 dient der Kolbenführung und besteht aus einem hierfür besonders geeigneten Werkstoff.

Die Bohrung 43 in der Kolbenstange 10 weist einen Abschnitt 70 größeren Durchmessers auf, in den sich das Rohr 59 hinein erstreckt, das sich mit dem kolbenstangenseitigen Ende 71 an einem Absatz 72 der Kolbenstange 10 abstützt. Gegenüber der Kolbenstange 10 ist das Rohr 59 mittels einer Dichtungsanordnung 73 gelagert und abgedichtet, die am kolbenseitigen Ende der Kolbenstange 10 vorgesehen ist. Die Dichtungsanordnung 73 bildet zusätzlich einen Anschlag für das in seinem Durchmesser erweiterte Rohrende 71.

Auf den einander entgegengesetzten Abflachungen 52 des Zylindergehäuses 7 sind in symmetrischer Anordnung jeweils sechs Spannzylinder 74 mit Plungerkolben 75 und Zylindergehäusen 76 angeordnet und mittels Schrauben 77 befestigt. Die Spannzylinder 74 gleichen in ihrem Aufbau den Spannzylindern 34, ihre Plungerkolben 75 haben jedoch einen größeren Durchmesser. Die ringförmigen Zylindergehäuse 76 sind gegenüber dem Zylindergehäuse 7 mittels Dichtringen 78 abgedichtet, wobei das Zylindergehäuse 7 den Boden der Druckkammer 79 der Spannzylinder 74 bildet.

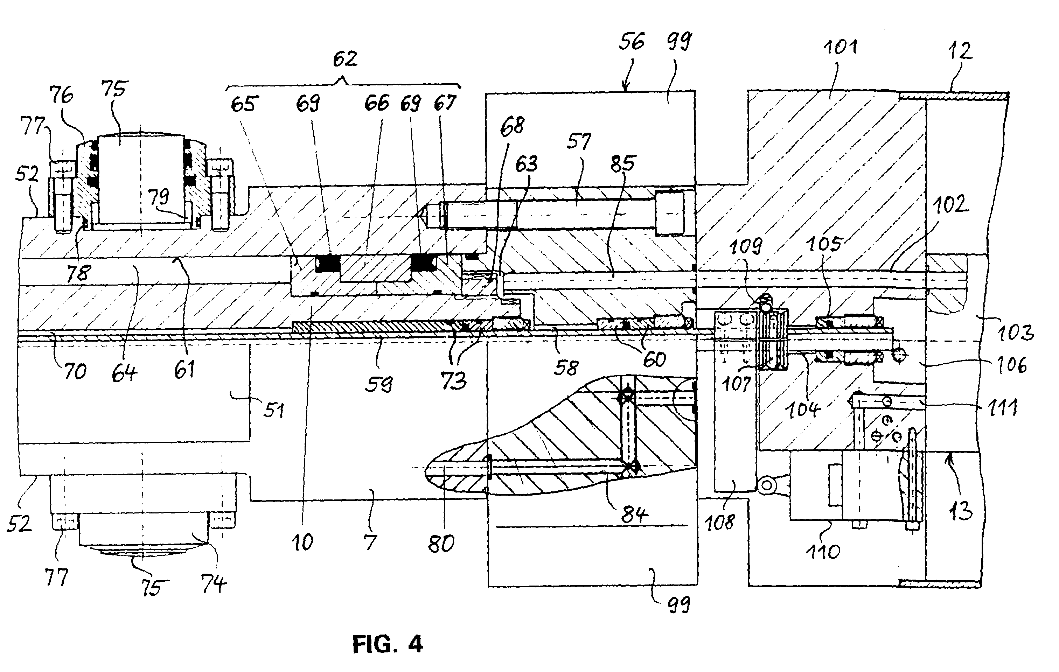

Die Druckmittelzufuhr zu den Spannzylindern 74 und zur Einziehkammer 64 erfolgt über achsparallele Langbohrungen 80, 81, die die Wand des Zylindergehäuses 7 durchsetzen. Die Langbohrung 80 steht über eine sie kreuzende Radialbohrung 82 mit der Einziehkammer in Verbindung. Von den Langbohrungen 81 führen in Sekantenrichtung verlaufende Bohrungen 83 zu den Druckkammern 79 der Spannzylinder 74. Die toten Enden der Bohrungen 80 bis 83 sind nach außen durch Stopfen verschlossen. Die Langbohrungen 80, 81 sind über Bohrungen im Zylinderboden 56 mit der Steuervorrichtung 13 verbunden. In Figur 4 ist die zur Langbohrung 80 führende Verbindungsbohrung 84 im Zylinderboden 56 gezeigt. Die Druckmittelzufuhr zur Ausfahrkammer 63 erfolgt über eine Bohrung 85 im Zylinderboden 56.

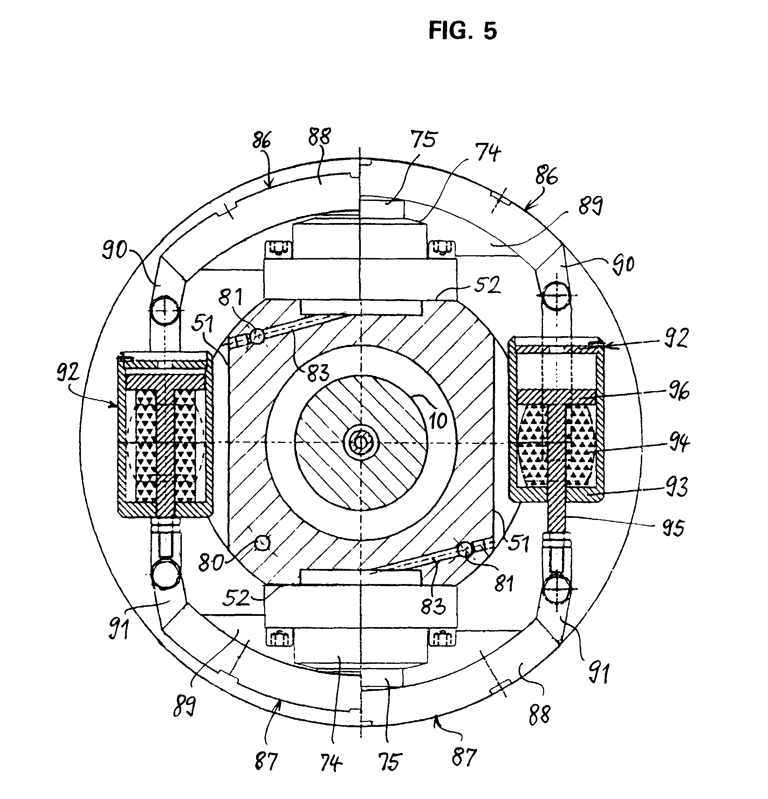

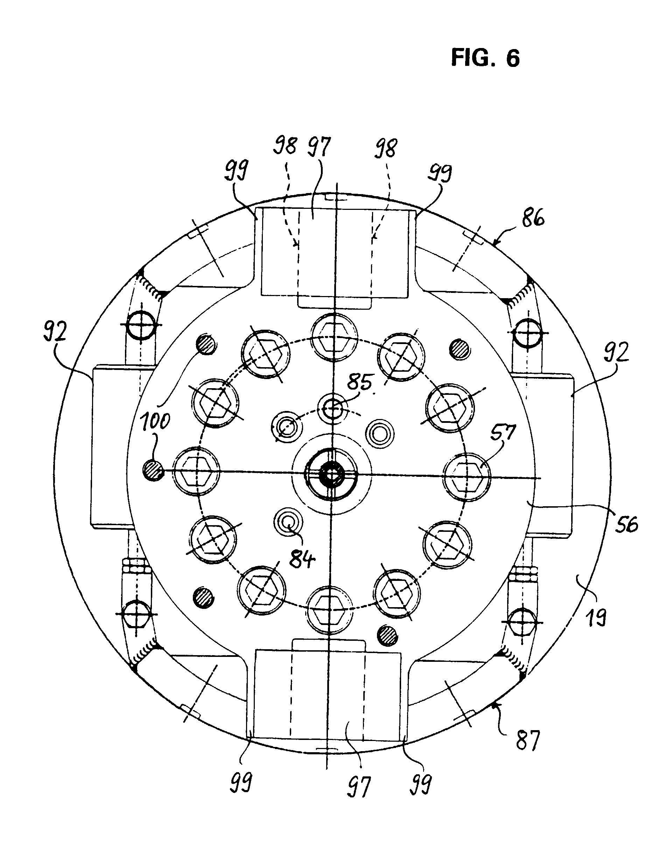

Die Ausgestaltung der Spannvorrichtung 8 ist den Figuren 1, 5 und 6 zu entnehmen. Die Spannvorrichtung 8 weist zwei Spannbacken 86, 87 auf, die sich längs der Hubvorrichtung 5 erstrecken und auf den Plungerkolben 75 der Spannzylinder 74 aufliegen. Die Spannbacken 86, 87 bestehen jeweils aus einer gebogenen Platte 88, deren mit Rillen versehene Außenfläche in ihrer Krümmung der Krümmung der Innenwand 9 des Rohrs 2 entspricht. Durch Stege 89 ist die Platte 88 auf ihrer Innenseite verstärkt. An ihren seitlichen Rändern haben die Spannbacken 86, 87 Laschen 90, 91, an denen Federelemente 92 mittels Gelenkverschraubungen befestigt sind, die Spannbacken 86, 87 mit einer Zugkraft belasten. Die Federelemente 92 bestehen aus einem zylindrischen Federgehäuse 93, das mit dem Spannbacken 86 verbunden ist und eine Elastomerdruckfeder 94 und einen über eine Zugstange 95 mit dem Spannbacken 87 verbundenen Federteller 96 enthält. Durch die Federelemente 92 werden die Spannbacken 86, 87 gegen die Plungerkolben 75 der Spannzylinder 74 gezogen und die Plungerkolben 75 werden beim Lösen der Spannvorrichtung in ihre Ausgangsstellung zurückbewegt. Figur 5 zeigt in ihrer linken Hälfte die Spannvorrichtung 8 in der Lösestellung und in ihrer rechten Hälfte die Spannvorrichtung 8 in der Spannstellung.

Zur Führung der Spannbacken 86, 87 in radialer Richtung bezogen auf den Hubzylinder 6 und zur Abstützung des Hubzylinders 6 an den Spannbacken 86, 87 in axialer Richtung, ist an der Platte 88 der Spannbacken 86, 87 eine Schiene 97 befestigt, die sich in axialer Richtung über den Zylinderboden 56 hinaus erstreckt. Die Schiene 97 ist auf beiden Seiten mit Führungsnuten 98 versehen, in die in einem parallelen Abstand an dem Zylinderboden 56 ausgebildete, sich radial nach außen erstreckende Führungsplatten 99 eingreifen. Neben der Führung der Spannbacken 86, 87 wird von den Schienen 97 und den Führungsplatten 99 vor allem die Reaktionskraft beim Vortrieb des Schiebers 4 auf die Spannbacken 86, 87 übertragen. Die Anordnung dieser Abstützung an dem Zylinderboden hat den Vorteil, daß das Zylindergehäuse 7 des Hubzylinders 6 von den hohen Axialkräften unbelastet bleibt, die beim Ausfahrhub auftreten können.

Das Gehäuse 12 der Steuervorrichtung 13 ist mittels Schrauben 100 mit einer Anschlußplatte 101 an den Zylinderboden 56 angeflanscht. Die Anschlußplatte 101 enthält mehrere Anschlußbohrungen 102, deren Mündungen in der Anschlußebene spiegelbildlich zu den Mündungen der diesen zugeordneten Bohrungen 84, 85 im Zylinderboden 56 angeordnet sind und diese mit einem Steuerblock 103 verbinden. In Verlängerung der Mittelachse des Hubzylinders 6 weist die Anschlußplatte 101 eine Bohrung 104 auf, in die ein Ende des Rohrs 59 hineinragt. Eine Dichtungsanordnung 105 dichtet das Rohr 59 auf seiner Außenfläche gegenüber der Wand der Bohrung 104 ab. Die Mündung des Rohrs 59 befindet sich in einer dem Steuerblock 103 zugekehrten und an diesen angeschlossenen Kammer 106.

Zwischen der Dichtungsanordnung 105 und dem Zylinderboden 56 ist auf dem Rohr 59 eine genutete Rastscheibe 107 und ein Schaltfinger 108 befestigt. Die Rastscheibe 107 bildet zusammen mit einer in der Anschlußplatte 101 angeordneten Kugelraste 109 ein Rastgesperre, durch das das Rohr 59 in zwei Axialpositionen kraftschlüssig arretierbar ist. Der Schaltfinger 108 betätigt mit seinem freien Ende ein Umsteuerventil 110, das zur Umsteuerung der Bewegungsrichtung des Hubzylinders 6 und der Beaufschlagung der Spannvorrichtungen 8, 11 dient. Das Umsteuerventil 110 ist über mehrere Bohrungen in der Anschlußplatte 101 mit dem Steuerblock 103 verbunden. In der Zeichnung ist lediglich eine Bohrung 111 dargestellt.

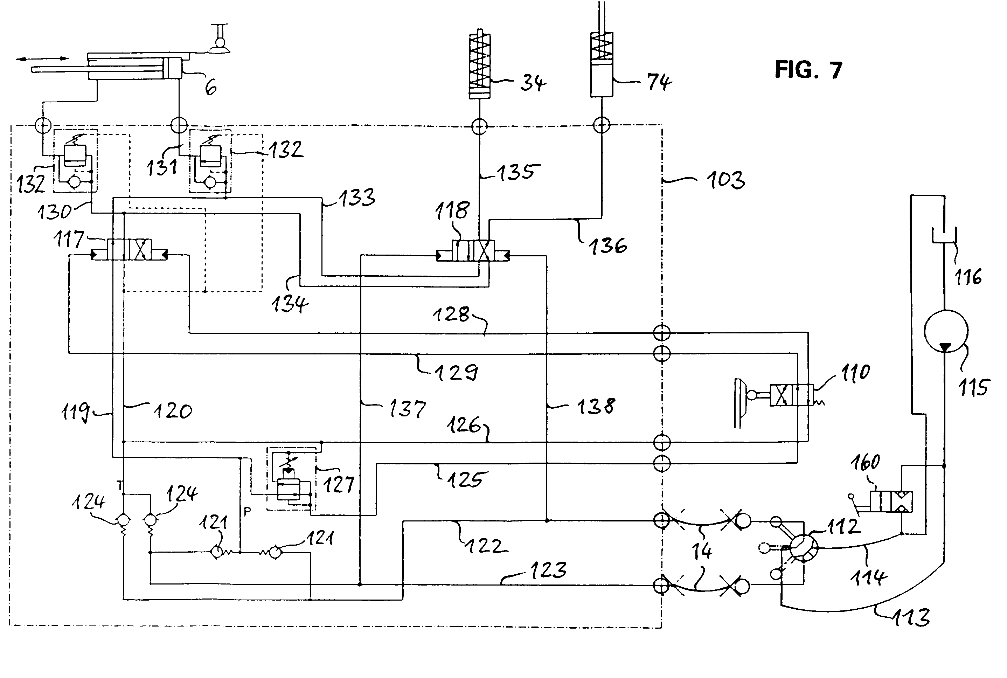

Der Aufbau der hydraulischen Steuerung ergibt sich aus dem in Figur 7 dargestellten Hydraulikschaltplan. In diesem Schaltplan sind die vom Steuerblock 103 umfaßten Ventile und Leitungen strichpunktiert eingerahmt. An den Steuerblock 103 angeschlossen sind der Hubzylinder 6, die Spannzylinder 34 und 74 und das Umsteuerventil 110. Über zwei Hochdruckschläuche 14 ist der Steuerblock 103 an ein handbetätigtes Steuerventil 112 angeschlossen, das als 4/3-Wegeventil mit offener Mitte ausgebildet ist. Von dem Steuerventil 112 führt eine Hochdruckleitung 113 und eine Niederdruckleitung 114 zu einem hydraulischen Energieversorgungssystem mit einer Pumpe 115 und einem Behälter 116. Zur Druckentlastung des Steuerventils 112 sind die Hochdruckleitungen 113 und die Niederdruckleitungen 114 durch ein handbetätigtes Bypassventil 160 verbindbar.

Der Steuerblock 103 enthält zwei vorgesteuerte Wegeventile 117, 118, die als 4/2-Wegeventile ausgebildet sind. Auf der Versorgungsseite ist das Wegeventil 117 an einer Hochdruckleitung 119 und einer Niederdruckleitung 120 angeschlossen. Die Hochdruckleitung 119 steht jeweils über ein federbelastetes Rückschlagventil 121 mit den beiden an die Druckschläuche 14 anschließbaren Eingangsleitungen 122, 123 in Verbindung. Die Rückschlagventile 121 öffnen in Richtung auf das Wegeventil 117. Die Niederdruckleitung 119 ist ebenfalls über zwei federbelastete Rückschlagventile 124 an die Eingangsleitungen 122, 123 angeschlossen, wobei die Rückschlagventile 124 in Richtung der Eingangsleitungen 122, 123 öffnen. Durch die Anordnung der Rückschlagventile 121, 124 wird sichergestellt, daß die Druckmittelzufuhr zum Wegeventil 117 ausschließlich über die Hochdruckleitung 119 und der Rücklauf ausschließlich über die Niederdruckleitung 120 erfolgt, gleichgültig in welcher Stellung sich das Steuerventil 112 befindet.

Parallel zum Wegeventil 117 ist die Versorgungsseite des Umsteuerventils 110 über Leitungen 125, 126 an die Hochdruckleitung 119 und die Niederdruckleitung 120 angeschlossen. Die Leitungen 125, 126 sind durch ein Druckbegrenzungsventil 127 verbunden, durch das der Druck in der Leitung 125 auf einen Maximalwert begrenzt wird. An die Verbraucherseite des Umsteuerventils 110 sind über Leitungen 128, 129 die Steuerzylinder des Wegeventils 117 angeschlossen. Das Umsteuerventil 110 ist als mechanisch betätigbares 4/2-Wegeventil ausgebildet und wird in den beiden Endstellungen des Kolbens des Hubzylinders 6 jeweils von der einen Schaltstellung in die andere umgschaltet.

An die Verbraucheranschlüsse des Wegeventils 117 sind über Leitungen 130, 131 die beiden Kammern des Hubzylinders 6 angeschlossen. In den Leitungen 130, 131 sind Druckschaltventile 132 angeordnet, die in Vorlaufrichtung erst bei Erreichen eines vorgegebenen Mindestdrucks öffnen. In Rücklaufrichtung ist der Durchgang jedoch frei. Weiterhin ist an die Verbaucheranschlüsse des Wegeventils 117 über Leitungen 133, 134 die Versorgungsseite des Wegeventils 118 angeschlossen, das auf der Verbraucherseite über eine Leitung 135 mit den Spannzylindern 34 und über eine Leitung 136 mit den Spannzylindern 74 verbunden ist. Die Steuerung des Wegeventils 118 erfolgt über Leitungen 137, 138 durch den Druck in den Eingangsleitungen 122, 123.

Bei der folgenden Erläuterung der Wirkungsweise der hydraulischen Steuerung wird zunächst von der in Figur 7 dargestellten Stellung der einzelnen Ventile ausgegangen, in der diese eine Vortriebsbewegung des Schiebers 4 bewirken. Hierbei ist die Eingangsleitung 122 über das Steuerventil 112 mit der Hochdruckleitung 113 und die Eingangsleitung 123 mit der Niederdruckleitung 114 verbunden. Entsprechend wird durch den Druck in der Leitung 138 das Wegeventil 118 in der gezeigten Stellung gehalten. Aus der Eingangsleitung 122 gelangt das Druckmittel über das rechte Rückschlagventil 121 in die Hochdruckleitung 119. Der Rücklauf von Druckmittel aus der Niederdruckleitung 120 zur Eingangsleitung 123 erfolgt über das rechte Rückschlagventil 124. Das Wegeventil 117 verbindet die Hochdruckleitung 119 über die Leitung 133, das Wegeventil 118 und die Leitung 136 mit den Spannzylindern 74. Die Spannzylinder 74 sind daher ausgefahren und halten das Zylindergehäuse 7 des Hubzylinders 6 mit Hilfe der Spannbacken 86, 87 an der Innenwand 9 des Rohrs 2 fest. Da zum Ausfahren der Spannzylinder 74 ein bestimmter Anfangsdruck erforderlich ist, um die Kraft der Federelemente 92 zu überwinden und eine ausreichende anfängliche Anpreßkraft zu erreichen, wird über das rechte Druckschaltventil 132 die Ausfahrkammer des Hubzylinders 6 erst nach Erreichen des erforderlichen Anfangsdrucks an die Leitung 133 angeschlossen.

Nach dem Öffnen des Druckschaltventils 132 herrscht in den Druckkammern der Spannzylinder 74 und in der Ausfahrkammer des Hubzylinders 6 der gleiche Druck. Die Höhe dieses Drucks richtet sich oberhalb des Schaltdrucks des Druckventils 132 nach dem Vortriebswiderstand des Schiebers 4. Je nach Größe des Vortriebswiderstands kann sich somit ein Arbeitsdruck in einem Bereich einstellen, dessen Untergrenze durch den Schaltdruck des Druckschaltventils 132 und dessen Obergrenze durch den maximalen Förderdruck der Pumpe 115 bestimmt ist. Da der sich einstellende Arbeitsdruck auch jeweils an den Spannzylindern 74 ansteht, paßt sich die Anpreßkraft der Spannzylinder 74 der Vortriebskraft des Hubzylinders 6 selbsttätig an. Durch ein geeignetes Flächenverhältnis von 1:2 bis 1:3 wird gewährleistet, daß die Haltekraft der Spannvorrichtung 8 in jedem Fall größer ist als die Vortriebskraft am Schieber 4.

Das Druckmittel in der Einziehkammer 64 des Hubzylinders 6 wird bei der Ausfahrbewegung über die Leitungen 130, 134 und das Wegeventil 117 in die Niederdruckleitung 120 und von dort zum Behälter 116 verdrängt. Auch die Spannzylinder 34 sind über die Leitung 135 des Wegeventils 118, die Leitung 134 und das Wegeventil 117 mit der Niederdruckleitung 120 verbunden und verbleiben daher während dieser Vortriebsphase des Molchs in der eingefahrenen Position.

Die Vortriebsphase wird beended, wenn der Hubzylinder 6 seine ausgefahrene Endstellung erreicht und dadurch das Umsteuerventil 110 in die andere Schaltstellung schaltet. Das Schalten des Umsteuerventils 110 kann auf unterschiedliche Weise erfolgen. Bei dem beschriebenen Ausführungsbeispiels des Molchs wird das Umsteuerventil 110 durch das Rohr 59 und den daran befestigten Schaltfinger 108 betätigt, indem das Ende 71 des Rohrs 59 bei Erreichen der Ausfahrendstellung der Kolbenstange 10 durch die Dichtungsanordnung 73 in Ausfahrrichtung und bei Erreichen der Einfahrendstellung durch den Absatz 72 in Einfahrrichtung bewegt wird. Durch die Rastscheibe 107 wird das Rohr 59 in der jeweiligen Schaltstellung gehalten.

Durch das Umschalten des Umsteuerventils 110 wird die Druckbeaufschlagung in den Leitungen 128, 129 umgekehrt und das Wegeventil 117 hydraulisch in seine zweite Schaltstellung geschaltet. Hierdurch werden die Ausfahrkammer des Hubzylinders 6 und die Druckkammern der Spannzylinder 74 mit der Niederdruckleitung 120 verbunden, wodurch der Schieber 4 entlastet und unter der Wirkung der Federlemente 92 die Spannvorrichtung 8 gelöst wird. Gleichzeitig werden die Spannzylinder 34 mit der Hochdruckleitung 119 verbunden und durch Ausfahren der Spannbacken 27 wird der Schieber 4 im Rohr 2 festgespannt. Sobald der Druck in der Leitung 133 den Schaltdruck des linken Druckschaltventils 132 in der Leitung 130 erreicht, wird die Einfahrkammer des Hubzylinders 6 mit Druck beaufschlagt und dadurch das Zylindergehäuse 7 mit den daran befestigten Bauteilen in Vortriebsrichtung bewegt. Ist die Kolbenstange vollständig eingefahren, wird das Umsteuerventil 110 durch das Rohr 59 wieder in seine in Figur 7 dargestellte Position zurückgeschaltet und in der beschriebenen Weise der nächste Vortriebshub des Schiebers 4 bewirkt.

Die beschriebene Steuerung der schrittweisen Vortriebsbewegung des Molchs erfolgt vollautomatisch und bedarf keiner zusätzlichen Steuerbefehle durch eine Bedienungsperson. Die Bewegung des Molchs kann jedoch jederzeit durch das außerhalb der Rohrleitung befindliche Steuerventil 112 unterbrochen oder in ihrer Richtung umgekehrt werden. Letzteres ist beispielsweise zweckmäßig, wenn der Molch in der Rohrleitung an ein Hindernis gerät, das er nicht überwinden kann. Wird das Steuerventil 112 in seine Mittelstellung bewegt, so werden die beiden Eingangsleitungen 122, 123 mit der zum Behälter 116 führenden Niederdruckleitung 114 verbunden. Hierdurch werden alle Leitungen entlastet, so daß sich die gerade gespannte Spannvorrichtung löst und der Hubzylinder stehen bleibt. In diesem Zustand kann beispielsweise der Molch mit Hilfe eines Seils aus der Rohrleitung herausgezogen werden.

Soll der Molch selbsttätig zum Einfahrende der Rohrleitung zurückkehren, so wird das Steuerventil 112 in die in der Zeichnung dargestellte untere Stellung gedreht. Hierdurch wird die Eingangsleitung 123 mit der Hochdruckleitung 113 und die Eingangsleitung 122 mit der Niederdruckleitung 114 verbunden. Die Ansteuerung des Wegeventils 118 erfolgt nun über die Leitung 137, wodurch das Wegeventil 118 in seine zweite Schaltstellung bewegt wird, in der die Leitung 133 mit der Leitung 135 und die Leitung 134 mit der Leitung 136 verbunden ist. Hierdurch werden beim Ausfahrhub des Hubzylinders 6 die Spannzylinder 34 im Schieber 4 betätigt, so daß der Schieber 4 mit Hilfe der Spannvorrichtung 11 im Rohr festgehalten wird, während sich das Zylindergehäuse 7 entgegen der Vortriebsrichtung bewegt. Beim anschließenden Einfahrhub des Hubzylinders 6 wird durch Beaufschlagung der Spannzylinder 74 das Zylindergehäuse 7 durch die Spannvorrichtung 8 festgehalten und der Schieber 4 entgegen der Vortriebsrichtung an das Zylindergehäuse 7 heranbewegt. Der Molch 1 bewegt sich dementsprechend schrittweise in seine Ausgangsposition zurück.

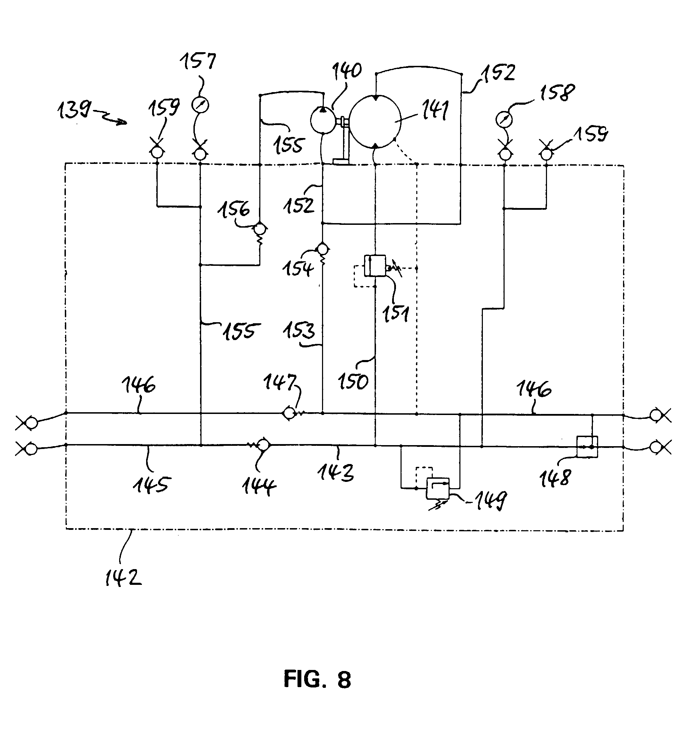

Um die Vortriebskraft des Molches unter Beibehaltung des primären Energieversorungssystems, beispielsweise des Energieversorgungssystems eines Hydraulikbaggers, wesentlich erhöhen zu können, kann zwischen das hydraulische Energieversorgungssystem und das Steuerventil 112 eine hydraulische Druckerhöhungsvorrichtung 139 geschaltet werden, die unter Inkaufnahme einer Reduzierung der Fördermenge den Druck in der Hochdruckleitung 113 erheblich erhöht. Der hydraulische Schaltplan einer vorteilhaften Druckerhöhungsvorrichtung 139, die druckabhängig zugeschaltet wird, ist in Figur 8 gezeigt. Die Druckerhöhungsvorrichtung 139 besteht aus einer Druckerhöhungspumpe 140, die von einem Hydromotor 141 angetrieben wird. Das Zuschalten der Druckerhöhungspumpe 140 und der Antrieb des Hydromotors 141 wird von einem Steuerblock 142 gesteuert. Der Steuerblock 142 weist eine an die Druckseite der Pumpe 115 anschließbare Eingangsleitung 143 und eine mit dieser über ein in Strömungsrichtung öffnendes Rückschlagventil 144 verbundene, an den Hochdruckanschluß des Steuerventils 112 anschließbare Ausgangsleitung 145 auf. Weiterhin ist eine stromab an den Behälter 116 und stromauf an den Niederdruckanschluß des Steuerventils 112 anschließbare Niederdruckleitung 146 mit einem Rückschlagventil 147 vorgesehen. In der Eingangsleitung 143 befindet sich ein Stromregler 148 zur Begrenzung der zugeführten Druckmittelmenge auf einen Maximalwert. Weiterhin ist die Eingangsleitung stromab des Stromreglers 148 durch ein Druckbegrenzungsventil 149 mit der Niederdruckleitung 146 verbunden. Der Hydromotor 141 wird aus der Eingangsleitung 143 über eine Leitung 150 und ein Druckschaltventil 151 gespeist, das durch den Druck in der Eingangsleitung 143 geschaltet wird, wenn dort ein vorgegebener Maximaldruck erreicht wird, der niedriger ist als der Schaltdruck des Druckbegrenzungsventils 149. Der Ausgang des Hydromotors 141 ist durch eine Leitung 152 mit der Saugseite der Druckerhöhungspumpe 140 verbunden. Von der Leitung 152 zweigt eine Leitung 153 zur Niederdruckleitung 146 ab. In der Leitung 153 befindet sich ein Vordruckventil 154, das für einen geeigneten Einlaßdruck auf der Saugseite der Druckerhöhungspumpe 140 sorgt. Über die Leitung 153 wird das aufgrund des größeren Schluckvolumens des Hydromotors 141 im Vergleich zur Druckerhöhungspumpe 140 überschüssige Druckmittel abgeführt. Der Ausgang der Druckerhöhungspumpe 140 ist über eine Leitung 155 an die Ausgangsleitung 145 angeschlossen. Ein Rückschlagventil 156 in der Leitung 155 verhindert, daß die Druckerhöhungspumpe 140 bei Stillstand durch den in der Ausgangsleitung 155 herrschenden Druck belastet wird. Zur Überwachung des Drucks in der Eingangsleitung 143 und in der Ausgangsleitung 145 sind Manometer 157, 158 und Prüfanschlüsse 159 vorgesehen.

Die mit der Druckerhöhungsvorrichtung erreichbare Druckerhöhung wird durch die Auslegung des Hydromotors und der Druckerhöhungspumpe bestimmt. Beispielsweise kann die Druckerhöhung 100 Prozent betragen, wobei eine Verringerung der dem Molch zugeführten Fördermenge von über 50 Prozent in Kauf genommen werden muß. Können die Abmessungen des Molchs aufgrund der Größe der zu durchfahrenden Rohrleitungen ausreichend groß bemessen werden, so kann die Druckerhöhungsvorrichtung auch unmittelbar an dem Molch angebracht sein. Hierbei kann sie zwischen die Rückschlagventile 121, 124 und das Wegeventil 117 der hydraulischen Steuerung des Molchs gestaltet sein. Durch eine solche Anordnung der Druckerhöhungsvorrichtung wird eine höhere Druckbelastung der zum Molch führenden Hochdruckschläuche vermieden.

## Patentansprüche

1. Molch zum Ausbau eines Erdkerns aus einem durch Rammen oder Pressen grabenlos verlegten Rohr, bestehend aus einem Schieber, einer in der Länge veränderbaren Hubvorrichtung und Spannvorrichtungen, wobei der Schieber mit einem Ende der Hubvorrichtung und mit einer ersten Spannvorrichtung und das andere Ende der Hubvorrichtung mit einer zweiten Spannvorrichtung verbunden ist, wobei die Spannvorrichtungen im Wechsel in eine Spannstellung, in der sie an die Innenwand eines Rohres anpressbar sind, oder in eine Lösestellung bewegbar sind, in der sie von der Innenwand des Rohres abgehoben sind und wobei die Hubvorrichtung und die Spannvorrichtungen mittels fernsteuerbarer hydraulischer Antriebe betätigbar sind, **dadurch gekennzeichnet,** daß die Hubvorrichtung (5) einen Fühler aufweist, der bei Erreichen einer Endstellung der Hubvorrichtung (5) ein Steuersignal erzeugt und daß zur Steuerung der hydraulischen Antriebe ein Steuerventil vorgesehen ist, das in Abhängigkeit von dem Steuersignal des Fühlers selbstätig die Arbeitsrichtung der hydraulischen Antriebe steuert.

2. Molch nach Anspruch 1, dadurch gekennzeichnet, daß das Steuerventil fest mit dem Molch (1) verbunden ist.

3. Molch nach einem der Ansprüche 1 oder 2, dadurch gekennzeichnet, daß die Hubvorrichtung (5) aus einem doppelt wirkenden hydraulischen Hubzylinder (6) besteht und daß als Fühler ein stift- oder stangenartiges Fühlerelement (59) vorgesehen ist, das den Boden (56) des Hubzylinders durchdringt, in eine Längsbohrung (43) in der Kolbenstange (10) hineinragt und gegenüber dem Zylinderboden (56) und der Kolbenstange (10) mit gleichem Durchmesser abgedichtet ist und das durch Anschläge an der Kolbenstange (10) und/oder dem Kolben zwischen zwei Stellungen hin und her bewegbar ist, wobei die Bewegung des Fühlerelements (59) auf das am Hydraulikzylinder (6) befestigte Umsteuerventil (110) übertragen wird.

4. Molch nach einem der vorhergehenden Ansprüche, dadurch gekennzeichnet, daß das Fühlerelement (59) durch ein kraftschlüssiges Rastgesperre (107, 109) in zwei Stellungen arretierbar ist.

5. Molch nach einem der vorhergehenden Ansprüche, dadurch gekennzeichnet, daß das Fühlerelement aus einem Rohr (59) besteht, durch das die Längsbohrung (43) der Kolbenstange (10) außerhalb des Hubzylinders (6) an eine Druckmittelleitung anschließbar ist.

6. Molch nach einem der vorhergehenden Ansprüche, dadurch gekennzeichnet, daß die Bewegungsrichtung des Molches von der Strömungsrichtung des zugeführten Druckmittels abhängig ist.

7. Molch nach einem der vorhergehenden Ansprüche, dadurch gekennzeichnet, daß die hydraulischen Antriebe der Spannvorrichtungen (8, 11) an ein Wegeventil (118) angeschlossen sind, das in einer ersten Stellung den Antrieb der ersten Spannvorrichtung (11) mit der einen Kammer des Hubzylinders (6) und den Antrieb der zweiten Spannvorrichtung (8) mit der anderen Kammer des Hubzylinders (6) verbindet und in einer zweiten Stellung die genannten Verbindungswege gegeneinander vertauscht und daß das Wegeventil (118) in Abhängigkeit vom Druckgefälle zwischen den beiden Anschlußleitungen (14) schaltbar ist, die den Molch (1) mit einem Energieversorgungssystem verbinden.

8. Molch nach einem der vorhergehenden Ansprüche, dadurch gekennzeichnet, daß Druckschaltventile (132) vorgesehen sind, die die Druckmittelzufuhr zum hydraulischen Antrieb der Hubvorrichtung (5) erst bei Erreichen eines zum Betätigen der Spannvorrichtung (8 bzw. 11) ausreichenden Drucks freigeben.

9. Molch nach einem der vorhergehenden Ansprüche, dadurch gekennzeichnet, daß zum Betätigen der Spannvorrichtungen (8, 11) hydraulische Spannzylinder (34, 74) vorgesehen sind und daß die beim Vortrieb des Schiebers gleichzeitig mit Druck beaufschlagte Kammer (63) des Hubzylinders (6) und der Spannzylinder (74) der zweiten, mit dem Hubzylinder verbundenen Spannvorrichtung (8) hydraulisch miteinander verbunden sind und die gesamte hydraulische Wirkfläche der Spannzylinder (74) etwa die 1,5- bis 2,5-fache Größe der hydraulischen Wirkfläche der Kammer (63) des Hubzylinders hat.

10. Molch nach einem der vorhergehenden Ansprüche, dadurch gekennzeichnet, daß die Spannzylinder (74) der zweiten Spannvorrichtung (8) auf dem Zylindergehäuse (7) des Hubzylinders (6) angebracht sind und durch Bohrungen (81, 83) im Zylindergehäuse (7) mit einem an den Hubzylinder (6) angeflanschten Steuerblock (103) verbunden sind.

11. Molch nach einem der vorhergehenden Ansprüche, dadurch gekennzeichnet, daß die Spannzylinder (34) der ersten Spannvorrichtung (11) über Bohrungen (40, 42, 43, 70) in der Kolbenstange (10) des Hubzylinders (6) und das in die Kolbenstange (10) hineinragende Rohr (59) an den Steuerblock (103) angeschlossen ist.

12. Molch nach einem der vorhergehenden Ansprüche, dadurch gekennzeichnet, daß die Spannzylinder (34, 74) Plungerkolben (35, 75)aufweisen und die Zylindergehäuse (36, 76) der Spannzylinder (34, 74) die Form von Hülsen haben, die mit einem Ende dicht mit dem Zylindergehäuse (7) des Hubzylinders (6) oder einem Gehäusekörper (18) des Schiebers (4) verbunden sind, wobei der Boden der Spannzylinder (34, 74) durch das Zylindergehäuse (7) des Hubzylinders bzw. den Gehäusekörper (18) des Schiebers gebildet wird.

13. Molch nach einem der vorhergehenden Ansprüche, dadurch gekennzeichnet, daß die Spannbacken (27, 86, 87) der Spannvorrichtungen (8, 11) in radialen Gleitführungen des Hubzylinders (6) bzw. des Schiebers (4) geführt sind und mit Hilfe vorgespannter Federn (32) oder Federelementen (92) gegen die Kolben (35, 75) der Spannzylinder (34, 74) gedrückt werden.

14. Molch nach einem der vorhergehenden Ansprüche, dadurch gekennzeichnet, daß die Spannbacken (86, 87) der zweiten Spannvorrichtung (8) aus einer sich in Längsrichtung des Hubzylinders (6) erstreckenden, gebogenen Platte (88) bestehen, die an einem Ende eine sich in Längsrichtung erstreckende Schiene (97) mit seitlichen Führungsnuten (98) hat, in die parallele, am Zylinderboden (56) des Hubzylinders (6) ausgebildete Führungsplatten (99) eingreifen.

15. Molch nach einem der vorhergehenden Ansprüche, dadurch gekennzeichnet, daß die Spannbacken (27) am Schieber (4) in radialen Ausnehmungen (26) angeordnet sind, die von einem Gehäusekörper (18) und einem mit diesem verbundenen Flansch (19) begrenzt werden und an ihrer Rückseite jeweils zwei parallele Führungszapfen (29) aufweisen, die in die Ausnehmungen (26) miteinander verbindenden Nuten (28) geführt sind.

16. Molch nach einem der vorhergehenden Ansprüche, dadurch gekennzeichnet, daß die Spannbacken (27, 86, 87) sich in Umfangsrichtung erstreckende Rillen haben.

17. Molch nach einem der vorhergehenden Ansprüche, dadurch gekennzeichnet, daß zwischen dem Schieber (4) und dem Hubzylinder (6) eine die Kolbenstange (10) bedeckende Teleskopfeder (48) angeordnet ist, die aus einem spiralförmig aufgewickelten Federband besteht, das in axialer Richtung zur Bildung einer Röhre auseinanderbewegbar ist.

18. Molch nach einem der vorhergehenden Ansprüche, gekennzeichnet durch eine Druckerhöhungsvorrichtung (139), die an den Ausgang einer hydraulischen Energieversorgung anschließbar und mit dem Molch verbindbar ist und aus einem Hydromotor (141), einer von dem Hydromotor (141) angetriebene Druckerhöhungspumpe (140), deren Schluckvolumen kleiner ist als das Schluckvolumen des Hydromotors(141), und einem Druckschaltventil (151) besteht, das bei Erreichen eines vorgegebenen Maximaldrucks den Eingang des Hydromotors (141) mit der Hochdruckleitung (143) der Energieversorgung verbindet.

## Claims

1. A go-devil for removing an earth core from a pipe laid without excavation but by ramming or pressing, comprising a pusher, a length-variable stroking device and clamping devices, said pusher being connected to one end of the stroking device and to a first clamping device while the other end of the stroking device is connected to a second clamping device, said clamping devices being movable alternately into a clamping position in which they can be pressed against the inner wall of a pipe or into a release position in which they are lifted clear of the inner wall of the pipe, and said stroking device and said clamping devices being actuatable by means of remote-controllable hydraulic drive mechanisms, **characterized in that** the stroking device (5) includes a sensor generating a control signal when the stroking device (5) reaches a limit position, and that a control valve is provided to control the hydraulic drive mechanisms, said valve controlling the working direction of the hydraulic drive mechanisms automatically in dependence upon the sensor's control signal.

2. The go-devil as claimed in claim 1, **characterized in that** the control valve is fixedly connected to the go-devil (1).

3. The go-devil as claimed in any one of the claims 1 or 2, **characterized in that** the stroking device (5) is a double-acting hydraulic stroking cylinder (6), and that the sensor is a pin or rod-type sensor element (59) which penetrates the bottom (56) of the stroking cylinder, projects into a longitudinal bore (43) in the piston rod (10) and is sealed relative to the cylinder bottom (56) and the piston rod (10) with the same diameter, and which as the result of stops on the piston rod (10) and/or piston is movable back and forth between two positions, whereby the movement of the sensor element (59) is transmitted to the reversal valve (110) mounted on the hydraulic cylinder (6).

4. The go-devil as claimed in any one of the preceding claims, **characterized in that** the sensor element (59) is adapted to lock in two positions by means of a frictional-engagement latching mechanism (107, 109).

5. The go-devil as claimed in any one of the preceding claims, **characterized in that** the sensor element is comprised of a tube (59) through which the longitudinal bore (43) of the piston rod (10) is adapted to be connected outside the stroking cylinder (6) to a fluid pressure line.

6. The go-devil as claimed in any one of the preceding claims, **characterized in that** the go-devil's direction of movement is dependent on the direction of flow of the supplied pressure fluid.

7. The go-devil as claimed in any one of the preceding claims, **characterized in that** the hydraulic drive mechanisms of the clamping devices (8, 11) are connected to a directional control valve (118) which in a first position connects the drive mechanism of the first clamping device (11) to the one chamber of the stroking cylinder (6) and the drive mechanism of the second clamping device (8) to the other chamber of the stroking cylinder (6), and which in a second position switches over the aforementioned connection paths, and that the directional control valve (118) is adapted to be switched in dependence on the pressure gradient between the two connection lines (14) connecting the go-devil (1) to an energy supply.

8. The go-devil as claimed in any one of the preceding claims, **characterized in that** pressure-responsive valves (132) are provided which do not enable the supply of pressure fluid to the hydraulic drive mechanism of the stroking device (5) until a level of pressure adequate for operating the clamping device (8 or 11) is reached.

9. The go-devil as claimed in any one of the preceding claims, **characterized in that** hydraulic clamping cylinders (34, 74) are provided to operate the clamping devices (8, 11), and that the stroking cylinder's (6) chamber (63) which is subjected to pressure simultaneously with the advance motion of the pusher, and the clamping cylinder (74) of the second clamping device (8) which is connected to the stroking cylinder are interconnected hydraulically, and that the entire effective hydraulic area of the clamping cylinders (74) is around 1.5 to 2.5 times larger than the effective hydraulic area of the stroking cylinder's chamber (63).

10. The go-devil as claimed in any one of the preceding claims, **characterized in that** the clamping cylinders (74) of the second clamping device (8) are mounted on the cylinder housing (7) of the stroking cylinder (6) and are connected via bores (81, 83) in the cylinder housing (7) to a control block (103) flanged to the stroking cylinder (6).

11. The go-devil as claimed in any one of the preceding claims, **characterized in that** the clamping cylinders (34) of the first clamping device (11) are connected to the control block (103) via bores (40, 42, 43, 70) in the piston rod (10) of the stroking cylinder (6) and the tube (59) projecting into the piston rod (10).

12. The go-devil as claimed in any one of the preceding claims, **characterized in that** the clamping cylinders (34, 74) have plunger pistons (35, 75) and the cylinder housings (36, 76) of the clamping cylinders (34, 74) have the form of sleeves which with their one end are tightly connected to the cylinder housing (7) of the stroking cylinder (6) or a housing body (18) of the pusher (4), the bottom of the clamping cylinders (34, 74) being formed by the cylinder housing (7) of the stroking cylinder or the housing body (18) of the pusher.

13. The go-devil as claimed in any one of the preceding claims, **characterized in that** the clamping jaws (27, 86, 87) of the clamping devices (8, 11) are guided in radial slideways of the stroking cylinder (6) or pusher (4) and are urged by means of biased springs (32) or spring elements (92) against the pistons (35, 75) of the clamping cylinders (34, 74).

14. The go-devil as claimed in any one of the preceding claims, **characterized in that** the clamping jaws (86, 87) of the second clamping device (8) are comprised of a bent plate (88) extending in the longitudinal direction of the stroking cylinder (6) and having at one end a rail (97) extending in the longitudinal direction with lateral guide grooves (98) engaged by parallel guide plates (99) formed on the cylinder bottom (56) of the stroking cylinder (6).

15. The go-devil as claimed in any one of the preceding claims, **characterized in that** the clamping jaws (27) on the pusher (4) are arranged in radial recesses (26) which are bounded by a housing body (18) and a flange (19) connected thereto, and have on their backs two parallel guide pins (29) each, which are guided in grooves (28) interconnecting the recesses (26).

16. The go-devil as claimed in any one of the preceding claims, **characterized in that** the clamping jaws (27, 86, 87) are provided with corrugations extending in circumferential direction.

17. The go-devil as claimed in any one of the preceding claims, **characterized in that** that a telescopic spring (48) is positioned between the pusher (4) and the stroking cylinder (6), said spring covering the piston rod (10) and consisting of spiral-wound spring strip adapted to move apart in axial direction so as to form a tube.

18. The go-devil as claimed in any one of the preceding claims, **characterized by** a pressure boosting device (139) adapted to be connected to the output of a hydraulic energy supply and to the go-devil and comprising a hydraulic motor (141), a pressure boosting pump (140) driven by the hydraulic motor (141) and having an absorption volume smaller than the absorption volume of the hydraulic motor (141), and a pressure-responsive valve (151) which connects the input of the hydraulic motor (141) with the high-pressure line (143) of the energy supply when a predetermined maximum pressure is reached.

## Revendications

1. Ecouvillon pour extraire un noyau de terre hors d'un tuyau posé sans excavation par fonçage ou par compression, composé d'un poussoir, d'un dispositif de vérins variable dans sa longueur et de dispositifs de serrage, le poussoir étant relié à l'une des extrémités du dispositif de vérins et à un premier dispositif de serrage et l'autre extrémité du dispositif de vérins étant reliée à un deuxième dispositif de serrage, les dispositifs de serrage étant alternativement dans une position de serrage, dans laquelle ils peuvent être appliqués contre la paroi interne d'un tuyau, ou déplaçables dans une position de relâche dans laquelle ils sont enlevés de la paroi interne du tuyau, le dispositif de vérins et les dispositifs de serrage pouvant être actionnés au moyen de mécanismes d'entraînement hydraulique télécommandés, **caractérisé en ce que** le dispositif de vérins (5) est muni d'un capteur générant un signal de commande lorsqu'une position limite du dispositif de vérins (5) est atteinte et en ce qu'il est prévu pour commander les mécanismes d'entraînement hydraulique une soupape de commande qui commande automatiquement la direction de fonctionnement des mécanismes d'entraînement hydraulique en fonction du signal de commande généré par le capteur.

2. Ecouvillon selon la revendication 1, **caractérisé en ce que** la soupape de commande est fixée à l'écouvillon (1).

3. Ecouvillon selon la revendication 1 ou 2, **caractérisé en ce que** le dispositif de vérins (5) est composé d'un vérin hydraulique (6) à double action et en ce qu'il est prévu comme capteur un capteur (59) en forme de pointe ou de tige qui traverse le fond (56) du vérin, se prolonge dans un trou longitudinal (43) de la tige de piston (10) et qui est étanché par rapport au fond du vérin (56) et à la tige de piston (10) de même diamètre et qui peut être déplacé entre deux positions dans un mouvement de va et vient en raison de coups contre la tige de piston (10) et / ou contre le piston, le mouvement du capteur (59) étant transmis à la soupape de renversement (110) fixée au cylindre hydraulique (6).

4. Ecouvillon selon l'une des revendications précédentes, **caractérisé en ce que** le capteur (59) peut être arrêté dans deux positions par un blocage à crans (107, 109) à force de contact.

5. Ecouvillon selon l'une des revendications précédentes, **caractérisé en ce que** le capteur est constitué d'un tube (59) au travers duquel le trou longitudinal (43) de la tige de piston (10) peut être raccordé à une conduite d'agent de pression à l'extérieur du vérin (6).

6. Ecouvillon selon l'une des revendications précédentes, **caractérisé en ce que** la direction du mouvement de l'écouvillon dépend de la direction du flux de l'agent de pression admis.

7. Ecouvillon selon l'une des revendications précédentes, **caractérisé en ce que** les entraînements hydrauliques des dispositifs de serrage (8, 11) sont reliés à une soupape à canaux (118) qui, dans une première position, relie l'entraînement du premier dispositif de serrage (11) à l'une des chambres du vérin (6) et l'entraînement du deuxième dispositif de serrage (8) à l'autre chambre du vérin (6) et, dans une seconde position, inverse les chemins de liaison indiqués et en ce que la soupape à canaux (118) est manoeuvrable en fonction de gradients de pression entre les deux conduites de raccordement (14) reliant l'écouvillon (1) au système d'alimentation en énergie.

8. Ecouvillon selon l'une des revendications précédentes, **caractérisé en ce qu'**il est prévu des soupapes manométriques (132) qui ne libèrent l'alimentation en agent de pression de l'entraînement hydraulique du dispositif de vérins (5) que lorsqu'une pression suffisante pour l'actionnement du dispositif de serrage (8 respectivement 11) est atteinte.

9. Ecouvillon selon l'une des revendications précédentes, **caractérisé en ce qu'**il est prévu des vérins hydrauliques de serrage (34, 74) pour actionner les dispositifs de serrage (8, 11) et en ce que la chambre (63) du vérin (6), dans laquelle la pression est appliquée au moment de la propulsion du poussoir, et le vérin de serrage (74) du deuxième dispositif de serrage (8) relié au vérin sont reliés ensemble hydrauliquement et l'ensemble de la surface hydraulique effective du vérin de serrage (74) est à peu près 1,5 à 2,5 fois plus grande que la surface hydraulique effective de la chambre (63) du vérin.

10. Ecouvillon selon l'une des revendications précédentes, **caractérisé en ce que** les vérins de serrage (74) du deuxième dispositif de serrage (8) sont disposés sur le cylindre (7) du vérin (6) et sont reliés, au travers d'ouvertures (81, 83) dans le cylindre (7), à un bloc de commande (103) bridé sur le vérin (6).

11. Ecouvillon selon l'une des revendications précédentes, **caractérisé en ce que** les vérins de serrage (34) du premier dispositif de serrage (11) sont raccordés au bloc de commande (103) au travers d'ouvertures (40, 42, 43, 70) dans la tige de piston (10) du vérin (6) et au travers du tuyau (59) se prolongeant dans la tige de piston (10).

12. Ecouvillon selon l'une des revendications précédentes, **caractérisé en ce que** les vérins de serrage (34, 74) sont munis de pistons plongeurs (35, 75) et les cylindres (36, 76) des vérins de serrage (34, 74) ont la forme de manchons qui sont d'un côté raccordés de façon étanche au cylindre (7) du vérin (6) ou à un corps de cylindre (18) du poussoir (4), le fond des vérins de serrage (34, 74) étant formé par le cylindre (7) du vérin ou par le corps de cylindre (18) du poussoir.

13. Ecouvillon selon l'une des revendications précédentes, **caractérisé en ce que** les mâchoires de serrage (27, 86, 87) des dispositifs de serrage (8, 11) sont dirigées dans des glissières radiales du vérin (6) ou du poussoir (4) et sont appliquées à l'aide de ressorts précontraints (32) ou d'éléments ressort (92) contre les pistons (35, 75) des vérins de serrage (34, 74).

14. Ecouvillon selon l'une des revendications précédentes, **caractérisé en ce que** les mâchoires de serrage (86, 87) du deuxième dispositif de serrage (8) sont composées d'une plaque (88) cintrée s'étendant dans le sens de la longueur du vérin (6) et qui a, à l'une de ses extrémités, un rail (97) s'étendant dans le sens de la longueur muni de gorges de guidage latérales (98) dans lesquelles s'encastrent des plaques de guidage (99) parallèles formées sur le fond du cylindre (56) du vérin (6).

15. Ecouvillon selon l'une des revendications précédentes, **caractérisé en ce que** les mâchoires de serrage (27) sont disposées sur le poussoir (4) dans des évidements radiaux (26) qui sont limités par un corps de cylindre (18) et un collet (19) relié à celui-ci et présentent sur leur face opposée chacune deux tenons de guidage parallèles (29) qui sont guidés dans les gorges (28) reliant les deux évidements (26).

16. Ecouvillon selon l'une des revendications précédentes, **caractérisé en ce que** les mâchoires de serrage (27, 86, 87) ont des rainures s'étendant dans le sens de la circonférence.

17. Ecouvillon selon l'une des revendications précédentes, **caractérisé en ce qu'**un ressort télescopique (48) recouvrant la tige du piston (10) est disposé entre le poussoir (4) et le vérin (6), ledit ressort télescopique (48) étant composé d'une bande ressort enroulée en spirale et pouvant se détendre dans la direction axiale pour former un tuyau.

18. Ecouvillon selon l'une des revendications précédentes, **caractérisé par** un dispositif de compression (139) qui peut être raccordé à la sortie d'une alimentation en énergie hydraulique et peut être relié à l'écouvillon et qui est composé d'un hydromoteur (141), d'une pompe booster (140) entraînée par l'hydromoteur (141) dont le volume est inférieur au volume de l'hydromoteur (141), et d'une soupape manométrique (151) qui relie l'entrée de l'hydromoteur (141) à la conduite à haute pression (143) de l'alimentation en énergie, lorsqu'une pression maximale prédéterminée est atteinte.
